Europäisches Patentamt

European Patent Office

Office européen des brevets

(19)

(11) Publication number: **0 194 785**
**A2**

# (12) EUROPEAN PATENT APPLICATION

(21) Application number: **86301437.9**

(22) Date of filing: **28.02.86**

(51) Int. Cl.⁴: **H 04 B 3/20**

(30) Priority: **13.03.85 GB 8506528**

(43) Date of publication of application:
**17.09.86 Bulletin 86/38**

(84) Designated Contracting States:
**AT BE CH DE FR IT LI LU NL SE**

(71) Applicant: **STC plc**
**190 Strand**
**London, WC2R 1DU(GB)**

(71) Applicant: **BRITISH TELECOMMUNICATIONS plc**
**British Telecom Centre 81 Newgate Street**
**London EC1A 7AJ(GB)**

(72) Inventor: **Rous, Ronald Frank**
**30 Cooks Spinney**
**Harlow Essex, CM20 3BJ(GB)**

(72) Inventor: **McKenzie, Alistar Russel**
**Paddocks Wrights Green Little Hallingbury**
**Bishops Stortford Hertfordshire(GB)**

(72) Inventor: **See, Peter James**
**1 Whinfield Martlesham Heath**
**Ipswich Suffolk, IP5 7TR(GB)**

(74) Representative: **Capsey, Sydney Ross**
**Standard Telephones and Cables Patent Department**
**Edinburgh Way**
**Harlow Essex CM20 2SH(GB)**

(54) **Packet switching system.**

(57) In a packet switching system in which speech is packetised, voice activity detectors (VAD's) (2,3) are used to monitor speech in the GO and RETURN paths. In the GO path, the VAD(2) compares the current level of packets with (a) the current background noise value, and (b) the computed value of the expected echo due to speech packets in the RETURN path.

If the GO path packet is larger than the parameter of (a) and (b) by a preset arrangement the packet is sent, otherwise it is not. If the "send" decision persists for a number of speech packets, that send condition has a hangover period attached to it. If the parameters are properly chosen, then the speech as heard by a subscriber is not unduly affected.

EP 0 194 785 A2

R.F. Rous - A.R. McKenzie -
P. J. See   4-1-1

## PACKET SWITCHING SYSTEM

The present invention relates to a transmission system of the decentralised type, in which intelligence including speech is handled in packet switching manner.

According to the invention, there is provided a packet switching system, in which speech is conveyed in digital packets each derived from a number of samples each derived from the speech waveform, in which a first voice activity detector (VAD) is associated with the GO path of the system to determine the signal amplitude appropriate to each speech packet in that path, in which a second VAD is associated with the RETURN path of the system to determine the signal amplitude appropriate to each speech packet in the RETURN path, in which control means is provided which compares the current level of speech packets in the GO path with

(i)       the current background noise value, and

(ii) ·     the computed value of the expected echo due to speech packets in the RETURN path,

in which if the GO path packet has an amplitude larger than the parameters of (i) and (ii) by a preset amount, the packet is sent, otherwise it is not sent, in which if the decision to transmit persists for the duration of N of said packets the transmit condition then has a preset hang-over period of T, and in which the parameters referred to above are so chosen that voice signals being conveyed in packet manner are not unduly disturbed.

An embodiment of the invention will now be described with reference to the accompanying highly schematic block diagram.

The arrangement to be described uses a combination of packeted voice arrangements and the use of voice activity detection. The transmission of voice packets is restricted to periods of genuine voice activity, so that for most of the time (except in periods of double talk) only one direction of the path between two talkers is open. This avoids the possibility of echoes returning to the talker due to poor return loss at the recipient's end of the system. The restriction of packet transmission to periods of active speech only improves system efficiency by reducing the number of speech packets offered for transmission by approximately 50%. One application is to a local area network (LAN) for voice and non-voice services. The principle, however, is applicable to other forms of packet switched network for public or private operation.

Additional features of the arrangement use a doubletalk switch to give an attenuated path, and the provision of artificial noise to fill the gaps between bursts of speech.

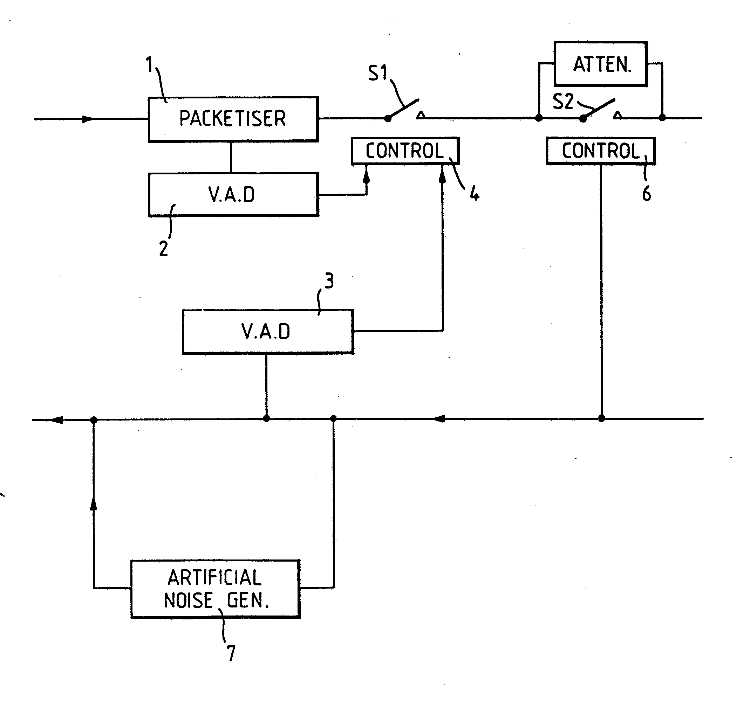

Referring to the accompanying drawing, PCM encoded signals are presented as a 64 kbit/s stream (other bit rates are possible for different forms of encoding), to a packetiser 1. The encoded signals are derived from the telephone user's speech signals and the background noise present between his talk spurts. The voice signal may also contain echoes of the speech being received by the telephone user. These echoes arise because of acoustic coupling between the receiver and microphone of the telephone handset if a four wire telephone is used. If a two wire telephone is used the echoes can arise because of imperfect balance in a hybrid circuit or its equivalent used for four wire - two wire conversion.

Within the packetiser 1 the octets of PCM are combined into packets, each comprising 32 octets, or some other quantity appropriate to the coding used. Since in this example the octets arrive at a rate of one every 125 microsecs, the delay incurred by packet formation is 4 millisecs. Other delays are incurred in the initial encoding process, and in the onward transmission over a LAN. A total delay of 6 millisecs is typical. This gives a loop delay in the echo path of 12 millisecs. If this echo path is not controlled, the subjective effect of the echo loop formed by this path in combination with a long connection in the public telephone network may be unacceptable to the users.

The packetiser 1 is connected to a voice activity detector (VAD) 2 whose function is to determine the value of each packet to be sent via the GO path. A second VAD 3 is connected to the RETURN path where packets arrive from the other end of the connection.

A transmit switch S1 is connected in the GO path, over which packets are sent to the other end of the connection, and a control 4 controls the operation of the switch and takes decisions on the basis of information supplied to it by the VADs 2 and 3.

A double talk switch S2 is connected in parallel with an attenuator 6 in the GO path, and a control 6 operates the switch S2 and takes decisions on the basis of whether received packets are present or not. An artificial noise generator 7 is connected to the RETURN path, and sends packets to the user when gaps are present in the received packet stream.

Note that although the two switches S1 and S2 are shown as mechanical switches, they would in fact be electronic in a real life system using metallic cables.

The control 4 for transmission decisions compares the level of the current packet with a previously computed value of background noise. It also compares with a computed value of expected echo derived from the current value of received packets and a previously computed value of echo ratio. Provided that the packet available for transmission exceeds the greater of these two thresholds by a given margin (typically of the order of 6dB), the packet is transmitted. If the decision to transmit persists for at least four packets (16 msecs), the transmit condition is subjected to a "hangover" period of typically 152 millisecs, otherwise transmission ceases as soon as the packet value falls below the decision level. Thus the voice signals for transmission are not subject to undue fragmentation and possible loss of lower level signals at the end of an utterance, and at the same time the transmission of packets due to short bursts of noise above the prevailing background level, is minimised.

Within a VAD the value of a voice packet is determined by taking the numerical values of each of the octets comprising that packet, and choosing the highest. Alternatively, an arithmetic or some other form of average value may be computed.

Within the control which decides whether packets are to be transmitted or not, the threshold values for echo and background noise may be determined in a number of ways. In one method for determining echo threshold, it is first assumed that an echo return loss of 0.5 is present. Thus the received packets are assumed to be attenuated to at least half their value by the lossy path between the telephone receiver and microphone. Thereafter the value of each received packet is compared with the highest value of packets presented for transmission during the next 28 msecs. This period is typical of the delays which may occur in a national network. Thus a pessimistic view is obtained of the value of the echo ratio - i.e. the ratio between packets presented for transmission and those received. The ratios are then stored for typically, 100 millisecs, and the highest of these ratios (i.e. the one showing the worst echo performance) is selected. The values obtained from the 100 millisecs periods are then considered over a longer period, and decisions are taken whether to raise or lower the currently registered value of echo ratio.

In one arrangement if the lowest of the 10 such values is less than the current setting, that setting is reduced, and if it is higher, that setting is increased, subject to a maximum ratio of 0.5. Note that the use of the lowest of the 10 values is a technique for smoothing out the effect of extreme values. There are other applicable techniques such as averaging. All 10 values do not have to be present - some may have been rejected because the received packets were below the predetermined threshold level. Decisions to move the current setting should, however, be based upon some minimum number of values (e.g. 5 out of 10). A similar approach may also be taken in the consideration of packet values leading to the 100 millisecs decisions.

In one variant, different periods (other than a fixed one second for each) may be used for the raising and lowering decisions. A further variant concerns the amount by which the setting is changed, which may correspond to a full move to the newly measured value of the ratio or may take place in limited steps. The procedures for increasing and decreasing the setting may differ in this way.

In further variants of the method of determining the echo ratio, packets received during periods of double talk may be disregarded. In a simplified system the proportion of double talk is taken to be small, and the effect is ignored. Another refinement uses a value of received packet threshold related to the currently-perceived value of background noise. Thus echo levels which would be masked by the background noise can be disregarded.

Before the final process by which transmission decisions are taken is described, we explain the method for determining the level of background noise. It is argued that an adaptive threshold which inhibits packet transmission should be slow to respond to changes to a higher level of background noise to allow the talker time to adjust by raising the level of his speech – rather than be subjected immediately to a high threshold which could cause the transmitted speech to be clipped. In a similar way, response to a decrease in background noise should be faster since there may be a tendency for the speaker to drop his voice, and it is preferable to lower the barriers as soon as possible.

The method adopted is to measure the value of packets presented for transmission at <u>all</u> times – the periods of background noise represent the minimum level that can be found. The period of time over which the decision as to whether to change to lower threshold is taken is typically 100 millisecs. During this time the highest value of 25 packets is measured. If this is lower than the current setting of the threshold, the threshold is lowered. The period over which decisions to raise the barrier are taken is typically between 1 and 4 secs. The 100 millisec "highest" values obtained during this time are examined, and the lowest of these values is compared with the threshold setting. If the selected value is higher, then the threshold is raised – subject to some maximum value above which it would be difficult to communicate.

The decision process for packet transmission can now be described. In the first instance packets presented for transmission whose value is less than the current setting of the background noise threshold (which includes a margin) are rejected. Those which satisfy this criterion are subjected to an echo decision process. Each "candidate" packet is compared with the highest value of packet received over the last 28 millisecs, to allow for external network delays as explained earlier. If the ratio between the two exceeds the current setting of the echo ratio by some agreed margin, the packet is transmitted.

During periods of double talk - that is when the decision is taken to transmit a packet and at the same time packets are being received, the transmitted packets are subjected to an attenuation process in which the level of the speech is reduced by 6dB. In this way the echoing loop which is now present, because both directions of transmission are open, is also an attenuation loop. Also the subjective effect of the echo is reduced to an acceptable level.

As mentioned earlier, a further refinement is the injection of artificial noise in periods when no packets are received and when no audio signals would be sent to the telephone. In the simplest arrangement a fixed level of artificial noise is used. Alternatively, the noise level is chosen to be a fair imitation of the background noise at the other end by measuring the level of received packets during the hangover time when background noise only should be present.

Finally, note that a single-ended version is possible in which the echo control is placed only at the public network end of the connection. Packets are transmitted continuously from the local user's node to the external network node, but speech is only transmitted to the external network during periods of voice activity. Packets are transmitted to the local user's node from the external network node only during periods of voice activity. For these purposes the external network node is equipped with voice activity detectors and controls in a similar manner to each node in the previous arrangement.

The modified arrangement has the advantage of lower cost and the echo control is not impaired. There is, however, some loss in the efficiency of packet transmission within the LAN.

CLAIMS :

1.      A packet switching system, in which speech is conveyed in digital packets each derived from a number of samples each derived from the speech waveform, in which a first voice activity detector (VAD) is associated with the GO path of the system to determine the signal amplitude appropriate to each speech packet in that path, in which a second VAD is associated with the RETURN path of the system to determine the signal amplitude appropriate to each speech packet in the RETURN path, in which control means is provided which compares the current level of speech packets in the GO path with

(i)      the current background noise value, and

(ii)      the computed value of the expected echo due to speech packets in the RETURN path,

in which if the GO path packet has an amplitude larger than the parameters of (i) and (ii) by a preset amount, the packet is sent, otherwise it is not sent, in which if the decision to transmit persists for the duration of N of said packets the transmit condition then has a preset hang-over period of T, and in which the parameters referred to above are so chosen that voice signals being conveyed in packet manner are not unduly disturbed.

2.      A system as claimed in claim 1, in which the computed value of the expected echo is derived from the current value of received packets and a previously computed value of echo ratio.

3.      A system as claimed in claim 1 or 2, in which a said VAD assesses the value of a packet by taking the numerical values for each said digital sample and selects therefrom the one for the highest amplitude.

4.      A system as claimed in claim 1, 2 or 3, in which the current background noise is determined from the minimum value of all packets found in the measurement period.

5. A system as claimed in claim 1, 2, 3 or 4, and in which the samples from which the packets are derived are eight-bit digital samples.

6. A packet switching system, substantially as described with reference to the accompanying drawing.

0194785